# FASCICULE DE BREVET EUROPEEN

(11) **EP 2 714 500 B1**
(45) Date de publication et mention de la délivrance du brevet: **20.12.2017**
(21) Numéro de dépôt: 12731077.9
(22) Date de dépôt: 25.05.2012
(51) Int. Cl.: A45C 5/14, A45C 9/00, B62K 3/00, B62K 15/00

(54) **VEHICULE A ROULETTES DE TYPE TROTTINETTE**
RADFAHRZEUG IN FORM EINES ROLLERS
WHEELED VEHICLE SUCH AS A SCOOTER

(30) Priorité: 27.05.2011 FR 1154655
(43) Date de publication de la demande: 09.04.2014
(73) Titulaire: Barro, Michel, 1227 Carouge (CH); Vial, Patrick, 42110 Feurs (FR)
(72) Inventeur: Peysson, Alexis, 69270 Fontaines-sur-Saône (FR); Vial, Patrick, 42110 Feurs (FR)
(74) Mandataire: Cabinet Laurent & Charras
(86) Numéro de dépôt international: PCT/FR2012/051191
(87) Numéro de publication internationale: WO 2012/164212

(56) Documents cités:
- WO-A1-01/46004
- AT-A1- 507 949
- DE-U1- 20 022 864
- US-A1- 2002 053 775
- US-B1- 6 276 701

## Description

### DOMAINE TECHNIQUE

L'invention se rapporte au domaine des véhicules à roulettes de type trottinette, c'est-à-dire des véhicules permettant de supporter le poids d'une personne au moyen d'une plateforme suffisamment large pour permettre à un utilisateur d'y positionner au moins un pied. De tels véhicules à roulettes comportent également des moyens de pilotage, tels un guidon ou une poignée pour permettre notamment à l'utilisateur de guider et de stabiliser le véhicule.

L'invention vise plus particulièrement un véhicule à roulettes dans lequel la plateforme supportant l'utilisateur peut pivoter par rapport à une colonne de direction. Une telle colonne de direction permet quant à elle de guider en rotation un tube avec lequel coopèrent les moyens de pilotage et au moins une roulette avant.

### ART ANTERIEUR

De façon générale, de tels véhicules à roulettes présentent donc une roulette avant agencée au niveau d'une extrémité inférieure du tube et en dessous de la colonne de direction. Ils comportent également une roulette arrière agencée au niveau d'une extrémité arrière de la plateforme destinée à supporter le poids de l'utilisateur.

Par ailleurs, de tels véhicules à roulettes sont généralement articulés entre la colonne direction et la plateforme, de façon à plier le véhicule et faciliter son transport ou son rangement. En effet, l'encombrement du véhicule est considérablement réduit en positionnant la plateforme sensiblement parallèlement par rapport au tube agencé coaxialement par rapport à la colonne de direction. De façon connue, l'articulation entre la plateforme et la colonne de direction est positionnée dans une zone située à l'arrière de la colonne de direction selon la direction privilégiée d'avancement du véhicule.

Cependant, un tel positionnement de l'articulation entre la plateforme et la colonne de direction ne permet pas de fournir un encombrement minimum du véhicule une fois plié. En effet, cet agencement ne permet pas de positionner la plateforme parallèlement et à proximité du tube.

De plus, un tel agencement a pour conséquence de positionner l'articulation entre la plateforme et la colonne de direction à l'arrière d'une zone de contact entre la roulette avant et le sol. Par suite, lorsque l'utilisateur se positionne sur la plateforme, son poids a pour effet de provoquer le basculement vers le bas de l'articulation entre la plateforme et la colonne de direction et par conséquent la fermeture de la trottinette. Un tel agencement nécessite alors d'utiliser des moyens de verrouillage de la rotation entre la plateforme et la colonne de direction suffisamment dimensionnés pour résister à l'action du poids de l'utilisateur sur la plateforme.

Il en est de même pour la solution présentée dans le document WO 01/46004, qui divulgue un véhicule à roulettes selon le préambule de la revendication 1, dans laquelle l'axe de rotation autorisant le basculement de la plateforme en position repliée est disposé sur la colonne de direction.

Le document US2002/053775 ne présente qu'un véhicule de type tricycle non repliable et ne répond donc pas au problème de réduction d'encombrement d'une trottinette en position repliée.

Ainsi, l'objectif de l'invention est de garantir un encombrement minimal du véhicule une fois replié et agencé en position fermé. Un second objectif est de limiter le poids du véhicule en minimisant la taille et la complexité des moyens de verrouillage pour bloquer la rotation de la plateforme par rapport à la colonne de direction.

### EXPOSE DE L'INVENTION

L'invention, concerne donc un véhicule à roulettes de type trottinette selon la revendication 1. La plateforme du véhicule à roulettes est assujettie en liaison pivot par rapport à la colonne de direction. L'axe de cette liaison pivot est positionné à l'avant de la colonne de direction, c'est-à-dire à proximité et au dessus de la roulette avant du véhicule. Une telle liaison pivot peut être réalisée de diverses manières. Selon une première variante, deux platines peuvent émerger parallèlement l'une par rapport à l'autre sensiblement perpendiculairement à la colonne de direction.

Selon une autre variante, un palier sensiblement cylindrique peut être placé à l'avant de la colonne de direction en émergeant du volume sensiblement tubulaire de la colonne de direction. Dans les deux cas de figure, les deux platines ou le palier comportent au moins un alésage permettant de supporter un axe de rotation libre de tourner à l'intérieur des deux platines de fixation ou du palier. Un tel axe de rotation est alors solidarisé au niveau des extrémités de la plateforme située en regard.

Avantageusement, l'axe de rotation de la plateforme par rapport à la colonne de direction peut être agencé à l'avant d'un point de contact avec le sol de la roulette avant selon la direction privilégiée d'avancement du véhicule.

En d'autres termes, dans un plan parallèle à la direction d'avancement du véhicule, la projection sur le sol de l'axe de rotation de la plateforme se situe en amont du point de contact de la roulette avant avec le sol. Un tel agencement permet de simplifier la structure du véhicule à roulettes en supprimant ou en limitant la complexité des moyens de verrouillage du mouvement de rotation de la plateforme par rapport à la colonne de direction. En effet, lorsque l'axe de rotation est agencé à l'avant du point de contact avec le sol de la roulette avant, une simple butée peut permettre de limiter la course en rotation de la plateforme par rapport à la colonne de direction. Ainsi dans ce cas, lorsque l'utilisateur se positionne sur la plateforme, son poids a pour effet d'appuyer sur la butée et permet de supprimer ou d'alléger les systèmes de verrouillage.

En pratique, la plateforme peut comporter, au niveau de l'axe de rotation de la plateforme, une structure en chappe formée par deux bras s'étendant de part et d'autre de la colonne de direction.

Ainsi, la plateforme présente une structure symétrique présentant une ouverture au milieu de laquelle la colonne de direction peut être positionnée. Les deux bras enlacent alors la colonne de direction pour coopérer avec l'axe de rotation agencé en liaison pivot avec la colonne de direction.

Bien entendu, selon une autre variante, la plateforme peut aussi comporter une structure asymétrique et présenter dans ce cas un mono bras pour s'articuler avec la colonne de direction.

Selon un mode de réalisation particulier, le véhicule peut comporter un contenant mobile par rapport au tube et des moyens d'accouplement pour transmettre et transformer le mouvement de rotation de la plateforme en un mouvement plan du contenant par rapport au tube.

Un tel contenant permet à l'utilisateur du véhicule de transporter avec lui des bagages, vêtements ou tout autre objet. De plus, un tel contenant présente une cinématique permettant l'escamotage de la roulette avant lorsque le véhicule n'est pas utilisé pour se déplacer. Dans ce cas, l'utilisateur peut simplement tracter le contenant en utilisant par exemple les moyens de pilotage du véhicule et des roulettes supplémentaires positionnées dans une partie basse du contenant, tel un bagage classique.

La plateforme est dans ce cas totalement intégrée à l'intérieur du volume d'encombrement général défini par le contenant. Le mouvement plan du bagage est réalisé dans un plan parallèle à la direction d'avancement du véhicule et perpendiculaire à la direction de rotation de la plateforme par rapport à la colonne de direction.

Selon une première variante, les moyens d'accouplement peuvent comporter une excroissance de la plateforme permettant de former une articulation avec le contenant. Une telle articulation est agencée à l'avant de l'axe de rotation de la plateforme selon la direction privilégiée d'avancement du véhicule, parallèlement par rapport à l'axe de rotation de la plateforme.

Une telle excroissance de la plateforme peut être positionnée entre deux platines de fixation solidaires de la colonne de direction, et être solidarisée à la plateforme au moyen d'un organe mécanique empêchant la rotation relative de la pièce formée par l'excroissance par rapport à l'axe de rotation de la plateforme. Un tel organe mécanique peut être formé par une goupille, une clavette, une vis de pression ou des cannelures notamment. Ainsi, la rotation de la plateforme génère également la rotation de l'excroissance dont une extrémité est assujettie en liaison pivot avec le contenant qui décrit donc un mouvement combiné dans un plan, tel une bielle entraînée par un maneton de vilebrequin.

Selon cette première variante, les moyens d'accouplement peuvent comporter une bague toroïdale solidaire du contenant. Une telle bague toroïdale est emmanchée sur le tube pour former une liaison linéaire annulaire entre le tube et le contenant.

Ainsi, la bague toroïdale est sertie dans l'enveloppe du contenant et permet de coulisser le long du tube tout en permettant le pivotement du contenant par rapport au tube.

Selon une seconde variante, les moyens d'accouplement peuvent comporter un pignon solidaire de la plateforme et une crémaillère solidaire du contenant.

Dans ce cas, les moyens d'accouplement permettent de générer un déplacement en translation du contenant par rapport à la colonne de direction et au tube. Le pignon peut être positionné entre les deux platines de fixation de la colonne de direction et être donc entraîné par la plateforme et son axe de rotation au moyen d'une goupille, d'une clavette, d'une vis de pression ou de cannelures notamment. La crémaillère est quant à elle, sertie dans l'enveloppe du contenant.

Selon une troisième variante de l'invention, les moyens d'accouplement peuvent comporter au moins une biellette assujettie en liaison pivot au niveau de deux extrémités avec, d'une part, une excroissance de la plateforme, et d'autre part, le compartiment.

Dans cette autre variante, la biellette décrit un mouvement plan tel une bielle de moteur à combustion solidarisée avec un maneton et un piston. Afin de mieux répartir les efforts, deux biellettes peuvent être utilisées et positionnées de part et d'autre de l'excroissance de la plateforme positionnée entre les deux platines de fixation de la colonne de direction. Ces biellettes permettent alors de transformer le mouvement de rotation de la plateforme en un mouvement de translation du contenant le long du tube.

Avantageusement, les moyens d'accouplement peuvent comporter un coulisseau solidaire du contenant, ledit coulisseau étant emmanché sur le tube pour former une liaison pivot glissant entre le tube et le contenant.

Dans le cas des deux variantes précédentes, le mouvement de translation du contenant par rapport au tube est alors guidé au niveau du tube au moyen du coulisseau.

En pratique, les moyens de pilotage peuvent être mobiles en translation par rapport au tube et peuvent s'escamoter, au moins partiellement, dans le volume général d'encombrement du contenant.

Autrement dit, les moyens de pilotage peuvent descendre jusqu'à disparaître partiellement dans le volume d'encombrement du contenant. Dans ce cas, lorsque l'utilisateur veut utiliser son véhicule, il doit, préalablement à l'ouverture de la plateforme, sortir les moyens de pilotage du volume d'encombrement du contenant. En effet, le basculement de la plateforme ne peut alors s'effectuer puisqu'il est réalisé simultanément au déplacement vertical du contenant en direction des moyens de pilotage.

Selon un mode de réalisation particulier, le véhicule à roulettes peut comporter des moyens de verrouillage, dans une position fermée, du mouvement de rotation de la plateforme par rapport à la colonne de direction.

En d'autres termes, les moyens de verrouillage permettent de bloquer la libre rotation de la plateforme par rapport à la colonne de direction lorsque celle-ci est agencée dans une position fermée correspondant au stockage ou au

Avantageusement, le véhicule à roulettes peut comporter des moyens de verrouillage automatique de la rotation de la roulette avant par rapport à la colonne de direction. De tels moyens de verrouillage automatique sont actionnés automatiquement lorsque la plateforme est placée dans la position fermée.

Ainsi, les moyens de verrouillage automatique permettent d'empêcher la rotation de la roulette avant autour de l'axe de rotation correspondant à celui de la colonne de direction. Un tel agencement permet alors d'éviter d'éventuels chocs entre la roulette avant et le contenant lorsque celui-ci est positionné dans une portion basse.

De tels moyens de verrouillage automatique permettent également de faciliter le transport et le stockage du véhicule à roulettes en évitant que des parties mobiles viennent heurter l'utilisateur et en permettant à l'utilisateur de tirer aisément le contenant grâce aux moyens de pilotage dont le mouvement de rotation par rapport à la colonne de direction est supprimé. En effet, dans ce cas, les moyens de pilotage sont utilisés comme poignée permettant la traction du contenant.

Selon un premier mode de réalisation, les moyens de verrouillage automatique de la rotation de la roulette avant peuvent être formés par un doigt d'indexage solidaire de la plateforme et coopérant avec une gorge ménagée dans une fourche de fixation de la roulette avant.

Dans ce cas, un tel doigt d'indexage peut être positionné au niveau de l'excroissance de la plateforme positionnée entre les deux platines de fixation solidaires de la colonne de direction. Le pivotement du doigt d'indexage est alors transmis par la plateforme via l'axe de rotation et un organe mécanique tel une goupille, une clavette, une vis de pression, des cannelures ou analogues.

Lorsque la plateforme est agencée dans la position fermée, le doigt d'indexage pénètre dans la gorge ménagée dans la fourche de fixation de la roulette avant et empêche ainsi sa rotation, et celle de la roulette avant autour de l'axe de la colonne de direction.

Selon un autre mode de réalisation, les moyens de verrouillage automatique de la rotation de la roulette avant peuvent être formés par deux butées solidaires de la plateforme et coopérant avec une excroissance radiale d'une fourche de fixation de la roulette avant.

Dans ce cas, les deux butées permettent de bloquer par l'extérieur la rotation de l'excroissance radiale en venant sensiblement en regard de deux faces parallèles lorsque la plateforme est agencée en position fermée.

### DESCRIPTION SOMMAIRE DES FIGURES

La manière de décrire l'invention ainsi que les avantages qui en découlent, ressortiront bien de la description du mode de réalisation qui suit, donné à titre indicatif et non limitatif, à l'appui des figures annexées dans lesquelles :
- la figure 1 est une vue en perspective d'un véhicule à roulettes conforme à l'invention ;
- la figure 2 est une vue de côté d'un véhicule à roulettes agencé dans une position repliée ;
- la figure 3 à 5 sont des vues de détails en perspective selon trois variantes, d'une portion du véhicule à roulettes dans une position intermédiaire, entre la position repliée et la position ouverte correspondant à celle d'utilisation ;
- la figure 6 est une vue en perspective d'un véhicule à roulettes équipé d'un contenant représenté partiellement en coupe, seule la demi-partie droite étant représentée;
- les figures 7 et 8 sont des vues de côté du véhicule équipé d'un contenant et de moyens pour générer son déplacement selon une première variante, respectivement avec la plateforme en cours de fermeture et en position fermée ;
- la figure 9 est une vue de côté représentative d'une seconde variante de moyens permettant de générer le déplacement d'un contenant agencé sur le véhicule ;
- la figure 10 est une vue de côté selon une troisième variante de moyens pour générer le déplacement d'un contenant coopérant avec le véhicule ;
- les figures 11 à 13 représentent en vue de coté des moyens de verrouillage de la plateforme en position déployée ;
- la figure 14 représente une vue perspective des moyens de rappel en position repliée de la plateforme ;
- les figures 15 et 16 sont des vues en perspective illustrant un agencement particulier du tube de direction ;
- la figure 17 est une vue de détail en coupe de la potence et d'une poignée formant guidon du véhicule à roulettes.

### MANIERE DE DECRIRE L'INVENTION

Comme déjà évoqué, l'invention concerne un véhicule à roulettes de type trottinette.

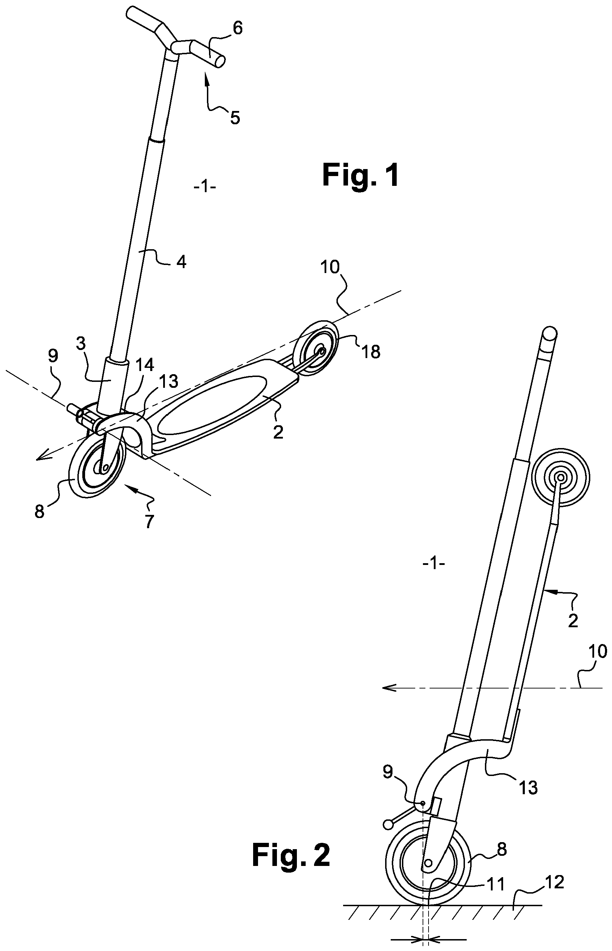

Tel que représenté à la figure 1, un tel véhicule à roulettes **1** comporte ainsi une plateforme **2** sur laquelle un utilisateur peut se positionner afin de se déplacer. Une telle plateforme **2** est articulée par rapport à une colonne de direction **3** de façon à permettre une réduction du volume d'encombrement du véhicule à roulettes **1** lors de son stockage ou de son transport.

Par ailleurs, un tel véhicule à roulettes comporte un tube **4** agencé en liaison pivot par rapport à la colonne de direction **3** et comportant à une première extrémité **5** des moyens de pilotage **6** tel un guidon. Un tel tube **4** comporte également à une seconde extrémité **7** une roulette avant **8,** dont le mouvement de rotation selon un axe coaxial au tube **4** est commandé par les moyens de pilotage **6.**

Par ailleurs, un tel véhicule à roulettes **1** présente un axe de rotation **9** perpendiculaire par rapport à une direction privilégiée **10** d'avancement du véhicule. Un tel axe de rotation **9** permet ainsi de basculer la plateforme **2** pour venir se positionner parallèlement à proximité du tube **4.**

Tel que représenté, cet axe de rotation **9** est positionné dans une zone située à l'avant de la colonne de direction **3** par rapport à la direction d'avancement privilégiée **10.** Pour ce faire, la plateforme **2** peut comporter une structure en chape formée par deux bras **13, 14** s'étendant de part et d'autre de la colonne de direction **3,** et dont une première extrémité coopère avec l'axe de rotation **9** et une seconde extrémité coopère avec la zone sensiblement plane permettant de supporter l'utilisateur de la plateforme **2.** A l'extrémité libre de la plateforme **2,** une roulette arrière **18** permet alors au véhicule de rouler sur le sol lorsque la plateforme **2** est agencée dans une position dépliée correspondant à celle de la figure 1.

Tel que représenté à la figure 2, le véhicule à roulettes **1** peut être agencé dans une position repliée dans laquelle la zone de la plateforme **2** sur laquelle l'utilisateur est positionné, est agencée sensiblement parallèlement par rapport au tube **4.**

Par ailleurs, l'axe de rotation **9** de la plateforme par rapport à la colonne de direction **3** est avantageusement positionné à l'avant, selon la direction privilégiée **10** d'avancement du véhicule, d'un point de contact **11** de la roulette avant **8** avec le sol **12.** En effet, cet agencement particulier permet de simplifier la conception du véhicule à roulettes **1** en minimisant ou en supprimant le système de verrouillage du mouvement de rotation de la plateforme **2** par rapport à la colonne de direction lorsqu'un utilisateur est positionné sur la plateforme **2.**

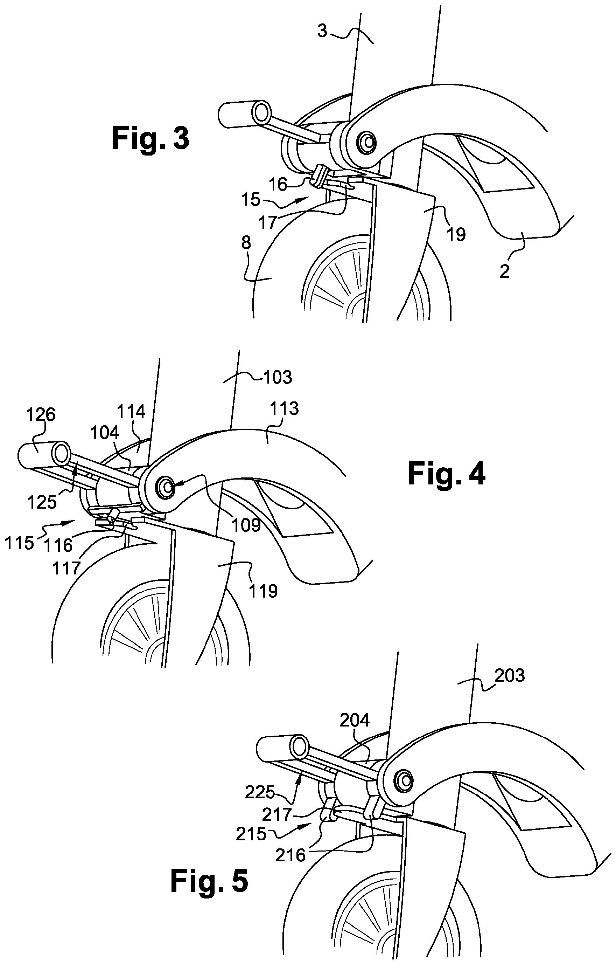

Tel que représenté à la figure 3, le véhicule à roulettes peut comporter des moyens de verrouillage automatique **15** de la rotation de la roulette avant **8** par rapport à la colonne de direction **3.** De tels moyens de verrouillage automatique **15** sont ainsi actionnés lorsque la plateforme **2** est agencée dans sa position fermée correspondant à la non-utilisation du véhicule pour transporter une personne.

De tels moyens de verrouillage automatique **15** peuvent, tels que représentés, comporter un doigt d'indexage **16** solidaire de la plateforme **2,** et par conséquent émergeant sensiblement radialement d'une pièce cylindrique positionnée au regard des deux extrémités des bras **13, 14** au niveau de l'axe de rotation **9.** Une telle pièce sensiblement cylindrique est donc entraînée en rotation par l'axe de rotation **9** au moyen d'un organe mécanique, tel une clavette, une goupille, une vis de pression ou encore des cannelures ménagées dans l'axe de rotation **9.**

Lorsque la plateforme **2** est placée dans sa position fermée, le doigt d'indexage **16** vient alors coopérer avec une gorge **17** ménagée dans une fourche de fixation **19** de la roulette avant **8.** L'ouverture de la gorge **17** peut également comporter des zones de chanfrein de façon à permettre un auto-centrage du doigt d'indexage **16** avec la gorge **17.** Ainsi, le placement de la plateforme **2** dans sa position fermée permet de bloquer automatiquement la rotation de la roulette **8** autour de l'axe coaxial à la colonne de direction **3.**

Tel que représenté à la figure 4, les moyens de verrouillage automatique **115** de la rotation de la roulette avant par rapport à la colonne de direction **103** peuvent comporter un doigt d'indexage **116** solidaire des bras **113, 114** de la plateforme. Un tel doigt d'indexage **116** émerge sensiblement radialement d'une pièce en chappe intégrant une excroissance **126** et positionnée au regard des deux extrémités des bras **113, 114** au niveau de l'axe de rotation **109.** Une telle pièce en chappe est donc entraînée en rotation par l'axe de rotation **109** au moyen d'un organe mécanique, tel une clavette, une goupille, une vis de pression ou encore des cannelures ménagées dans l'axe de rotation **109.**

La pièce en chappe est rapportée au niveau d'un palier sensiblement cylindrique **104** placé à l'avant de la colonne de direction **103.** Un tel palier **104** peut être quant à lui rapporté par soudure sur la colonne de direction **103** mais selon une variante de l'invention la colonne de direction **103** et le palier **104** peuvent aussi former un ensemble monobloc usiné ou moulé.

De même que précédemment, le doigt d'indexage **116** vient coopérer avec une gorge **117** ménagée dans une fourche de fixation **119** de la roulette avant.

Tel que représenté à la figure 5, et selon une autre variante, les moyens de verrouillage automatique **215** peuvent également comporter une pièce en chappe munie de deux butées **216** pour immobiliser la rotation d'une excroissance radiale **217** d'une fourche de fixation **219** de la roulette avant. Une telle immobilisation de l'excroissance radiale **217** est donc réalisée automatiquement lorsque la plateforme est agencée dans une position fermée.

Comme à la figure précédente, la pièce en chappe pivote par rapport à un palier sensiblement cylindrique 2**04** placé à l'avant de la colonne de direction 2**03.**

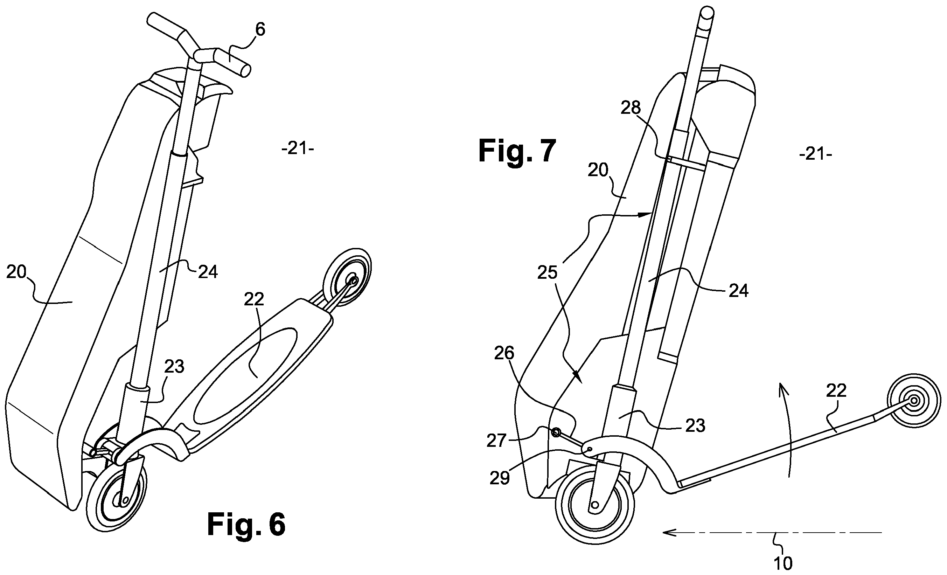

Tel que représenté à la figure 6, le véhicule à roulettes **21** peut recevoir un contenant **20** à l'intérieur duquel le tube **24** pénètre et permettant à un utilisateur de transporter avec lui des bagages ou vêtements.

Tel que représenté à la figure 7, le contenant **20** peut être mobile par rapport au tube **24** selon un mouvement plan correspondant à celui de la figure. Par ailleurs, le mouvement du contenant **20** peut être commandé par des moyens d'accouplement **25** permettant de transformer le mouvement de rotation de la plateforme **22** par rapport à la colonne de direction **23** en un mouvement plan du contenant **20.**

De tels moyens d'accouplement **25** peuvent comporter notamment une excroissance **26** de la plateforme **22.** Une telle excroissance **26** émerge ainsi d'une pièce cylindrique positionnée entre les deux bras de la plateforme **22.** Par ailleurs, une telle excroissance **26** permet de former une articulation **27** entre le contenant **20** et la plateforme **22.** Une telle articulation **27** est donc décalée axialement par rapport à l'axe de rotation **29** de la plateforme par rapport à la colonne de direction **23.**

De plus, les moyens d'accouplement **25** peuvent comporter une bague toroïdale **28** solidaire du contenant **20** et permettant de générer avec le tube **24** une liaison linéaire annulaire entre le contenant **20** et le tube **24.**

Tel que représenté, lorsque l'utilisateur décide de replier la plateforme **22** pour par exemple stocker le véhicule **21,** le basculement de la plateforme **22** génère alors la descente du contenant **20** par rapport au tube **24** et permet ainsi d'escamoter la roulette avant du véhicule **21** à l'intérieur du volume général du contenant **20.** Un tel contenant **20** peut alors être tracté au moyen des organes de pilotage et de roulettes additionnelles positionnées à chaque coin inférieur du contenant **20.**

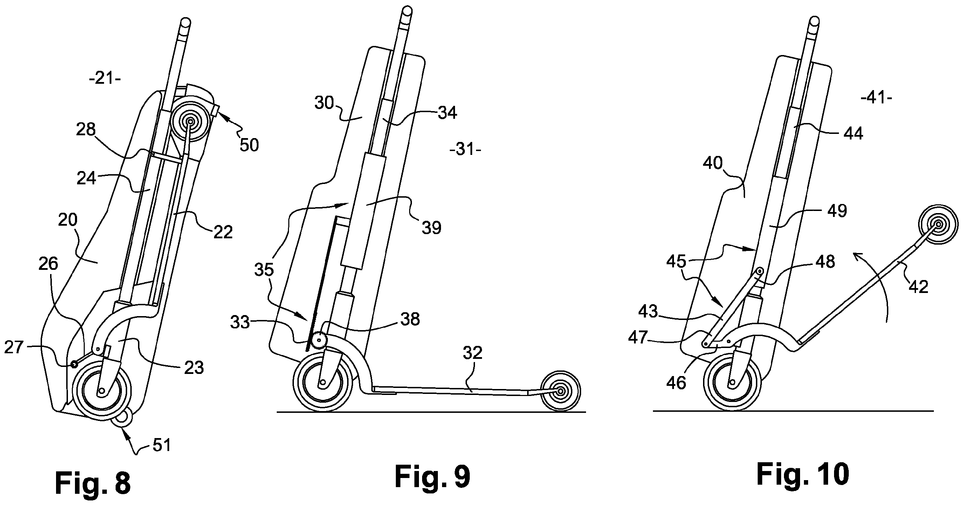

Tel que représenté à la figure 8, un véhicule à roulettes **21** peut également comporter des moyens de verrouillage **50** de la plateforme **2** lorsque celle-ci est agencée dans sa position repliée. De tels moyens de verrouillage **50** permettent en effet d'éviter tout basculement accidentel de la plateforme **22** lorsque l'utilisateur souhaite tracter le contenant **20** manuellement grâce aux moyens de guidage et aux roulettes additionnelles **51.**

Tel que représenté aux figures 9 et 10, les moyens d'accouplement peuvent être représentés selon deux autres variantes. Dans ces deux modes de réalisation, le contenant **30,40** est alors mobile selon un mouvement de translation par rapport au tube **34, 44.**

En effet, tel que représenté à la figure 9, les moyens d'accouplement **35** peuvent comporter un pignon **38** agencé au niveau de l'axe de rotation de la plateforme **32.** Un tel pignon **38** coopère alors avec une crémaillère **33** solidaire du contenant **30.**

Par ailleurs, un coulisseau **39** également solidaire du contenant **30,** permet de guider en liaison pivot le contenant par rapport au tube **34.**

De même, et tel que représenté à la figure 10, les moyens d'accouplement **45** peuvent être formés par au moins une biellette **43,** dont les extrémités **47** et **48** sont agencées en liaison pivot avec d'une part, une excroissance **46** positionnée entre les bras de la plateforme **42,** et d'autre part, un coulisseau **49** solidaire du contenant **40.** Un tel coulisseau **49** permet alors de générer une liaison pivot glissant du contenant **40** avec le tube **44.**

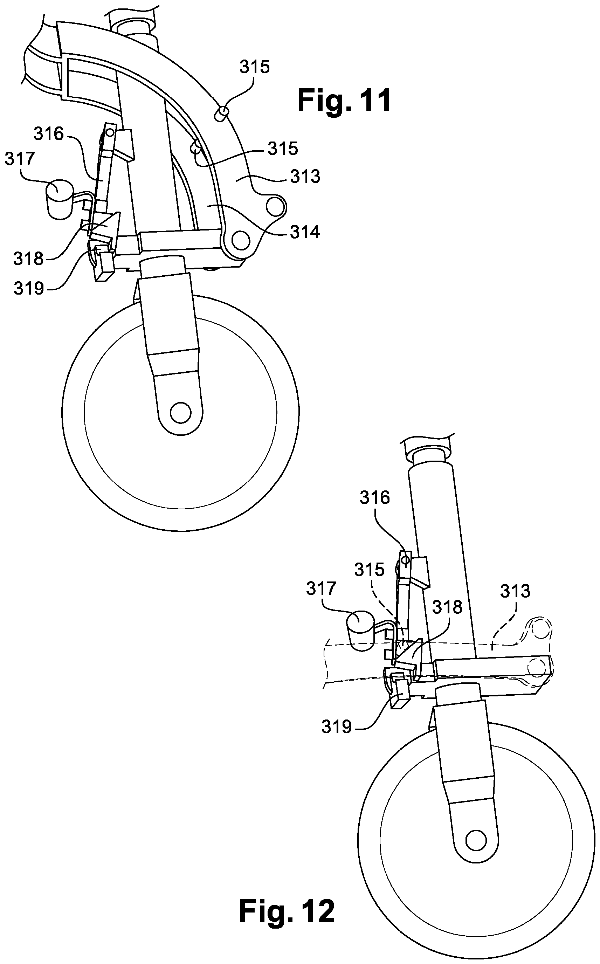

Tel que représenté à la figure 11, un tel véhicule à roulettes peut également comporter des moyens de verrouillage de la plateforme **2,** lorsque celle-ci est agencée dans une position déployée.

De tels moyens de verrouillage permettent ainsi d'éviter toute fermeture de la plateforme, par rapport à la colonne de direction, lorsque celle-ci est dans une position déployée correspondant à son utilisation, pour permettre le transport d'une personne.

De tels moyens de verrouillage en position déployé de la plateforme peuvent comporter notamment, un levier **316,** agencé en liaison pivot par rapport à la colonne de direction.

Un tel levier **316** peut notamment comporter une pédale **317,** permettant à l'utilisateur de générer avec son pied le mouvement de rotation du levier **316** par rapport à la colonne de direction.

Par ailleurs, l'extrémité libre du levier **316** peut présenter deux champs inclinés **318,** disposés respectivement de part et d'autre du levier **316,** et destinés à coopérer avec des pions cylindriques **315,** positionnés sur les faces intérieurs en regard des bras **313 - 314** de la plateforme.

En effet, et tel que représenté à la figure 12, lors de l'ouverture de la plateforme, les pions **315** viennent coopérer avec les champs inclinés **318** du levier **316** et provoquent son déplacement en rotation.

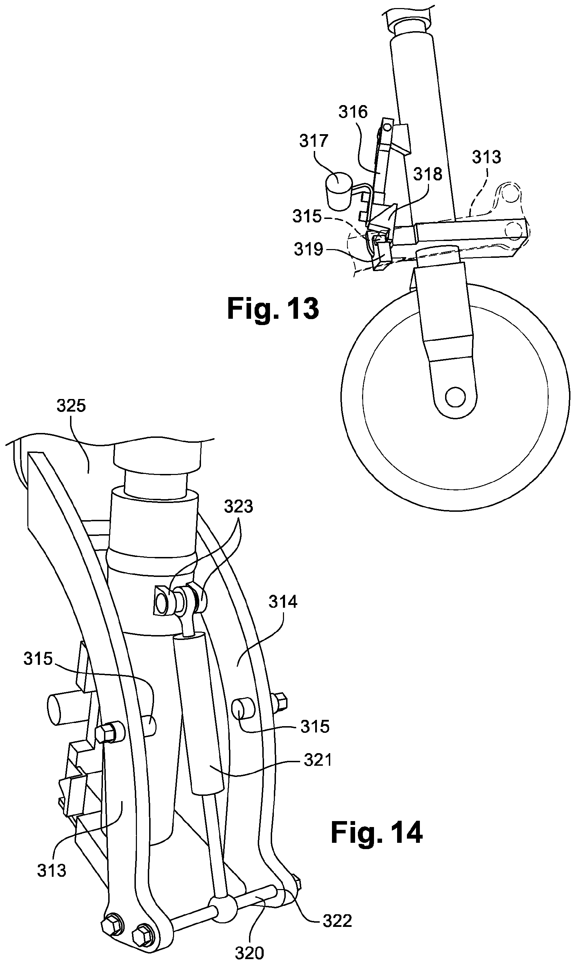

Tel que représenté à la figure 13, une fois la plateforme agencée dans cette position déployée, le levier **316** revient dans une position de repos grâce à des moyens de rappels élastiques en torsion, agencés au niveau de la liaison pivot avec la colonne de direction.

Les pions **315** viennent alors en appui sur des butés **319,** de façon à limiter l'angle d'ouverture de la plateforme par rapport à la colonne de direction.

Une fois l'utilisation du véhicule à roulettes terminée, et lorsque l'utilisateur souhaite agencer la plateforme dans une position repliée, il effectue une pression au niveau de la pédale **317,** pour permettre aux pions **315** de se libérer des moyens de verrouillage.

Selon un autre aspect innovant de l'invention, et tel que représenté à la figure 14, un tel véhicule à roulettes peut comporter des moyens de rappels permettant d'effectuer une fermeture automatique de la plateforme. Un tel rappel automatique se produit lorsque l'utilisateur actionne avec son pied la pédale des moyens de verrouillage en position déployée.

De tels moyens de rappels peuvent comporter un vérin **321,** de type mécanique, pneumatique ou hydraulique notamment. Tel représenté, le vérin **321** peut être positionné dans la zone avant de la colonne de direction, et coopérer en liaison pivot avec, d'une part la colonne de direction, et d'autre part, les deux bras **313, 314** de la plateforme.

Pour ce faire, la colonne de direction peut comporter deux excroissances **323,** munies respectivement d'un alésage à l'intérieur duquel un axe **325** est positionné.

De même, les bras **313 - 314** de la plateforme peuvent comporter deux excroissances **322,** présentant chacune un alésage à l'intérieur duquel, un axe **322** est agencé.

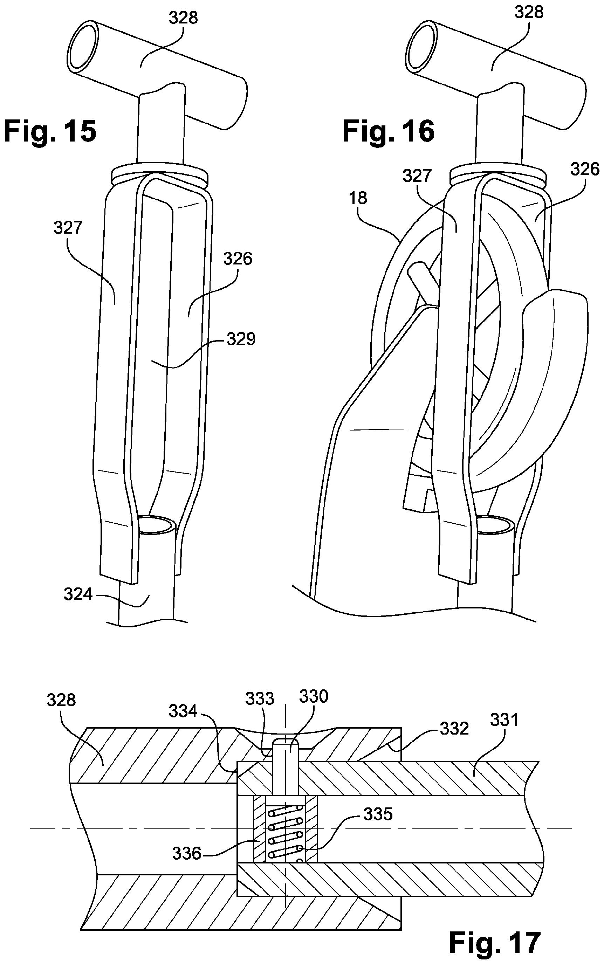

Par ailleurs, et tel que représenté à la figure 15, le tube **324** peut comporter une ouverture **329** agencée à proximité de la première extrémité, présentant les moyens de pilotage. Une telle ouverture **329 est** formée entre deux montants **326, 327** du tube **324.**

Tel que représenté à la figure 16, une telle ouverture **329** permet de loger la roue arrière **18** du véhicule à roulettes, lorsque la plateforme est agencée dans une position repliée.

Ainsi, la compacité du véhicule à roulettes est améliorée lorsque celui-ci est agencé dans sa position repliée, pour faciliter son transport, ou son stockage notamment.

Par ailleurs, les moyens de pilotage peuvent comporter une potence **328,** agencée au dessus de l'ouverture **329,** et dans laquelle des poignées peuvent être rapportées.

Un tel agencement permet ainsi également de limiter l'encombrement du véhicule à roulettes, lorsque celui-ci n'est pas utilisé, et facilite son introduction dans un sac de transport notamment.

Tel que représenté à la figure 17, la potence **328** peut comporter une ouverture conique **332,** de manière à réaliser un auto-centrage de la poignée **331,** à l'intérieur d'un alésage.

De plus, la potence **328** peut également comporter un épaulement interne **334,** permettant de stopper le mouvement de translation de la poignée **331** à l'intérieur de l'alésage, lorsqu'un moyen d'indexage **330,** formé par un pion, est positionné dans un plan déterminé.

En effet, un alésage **333** peut être ménagé dans la potence **328** de façon à coopérer avec le pion d'indexage **330,** destiné à être agencé en regard.

De plus, des moyens de rappels élastiques **335** permettent de pousser automatiquement le pion d'indexage **330** à l'intérieur de l'alésage **333.**

Une pièce de guidage **336,** par ailleurs positionné à l'intérieur de la poignée **331,** et permet de maintenir en position le moyen de rappel à l'élastique **335,** formé par un ressort sollicité en compression.

Un tel agencement permet ainsi de faciliter la mise en place des poignées **331,** à l'intérieur de la potence **328.** Un utilisateur peut alors effectuer cette opération très rapidement et ce, au moyen d'une seule de ses mains, en effectuant un mouvement de translation de la poignée **331** à l'intérieur de la potence **328,** puis une rotation une fois la poignée **331** en contact avec les frottements internes **334.**

Il ressort de ce qui précède qu'un véhicule à roulettes conforme à l'invention présente de nombreux avantages, et notamment :
- il permet de garantir un encombrement minimal lors du stockage ou du transport en position fermée de la plateforme ;
- il permet de limiter le nombre de composants et/ou leur dimensionnement afin de maintenir dans une position ouverte la plateforme lorsque l'utilisateur est positionné à sa surface ;
- il permet de ranger l'ensemble de la plateforme dans un contenant en prenant un minimum de place dans ce dernier ;
- il permet de passer très rapidement d'un ensemble destiné à une utilisation type trottinette à un ensemble destiné à être utilisé comme un bagage type valise à roulettes.

## Revendications

1. Véhicule à roulettes (1, 21, 31, 41) de type trottinette comportant une unique plateforme (2, 22, 32, 42) sur laquelle un utilisateur peut se positionner pour se déplacer et une colonne de direction (3, 23) permettant de guider en rotation un tube (4, 24, 34, 44) comportant, à une première extrémité (5), des moyens de pilotage (6), tels un guidon, et à une seconde extrémité (7), une roulette avant (8), ladite plateforme (2, 22, 32, 42) étant assujettie en liaison pivot par rapport à ladite colonne de direction (3, 23) selon un axe de rotation (9, 29) perpendiculaire à une direction privilégiée (10) d'avancement dudit véhicule (1, 21, 31, 41) **caractérisé en ce que** ledit axe de rotation (9, 29) de la plateforme (2, 22, 32, 42) par rapport à la colonne de direction (3, 23) est agencé dans une zone située à l'avant de la colonne de direction (3, 23), selon ladite direction privilégiée (10) d'avancement du véhicule (1, 21, 31, 41), par opposition à une zone située à l'arrière de la colonne direction (3, 23) où une roulette arrière (18) coopère avec la plateforme (2, 22, 32, 42), ledit axe de rotation (9, 29) autorisant le basculement de la plateforme (2, 22, 32, 42) entre une position dépliée et une position repliée dans laquelle la plateforme (2, 22, 32, 42) est agencée sensiblement parallèlement par rapport au tube (4, 24, 34, 44).

2. Véhicule selon la revendication 1, **caractérisé en ce que** l'axe de rotation (9) de la plateforme (2) par rapport à la colonne de direction (3) est agencé à l'avant d'un point de contact (11) avec le sol (12) de ladite au moins une roulette avant (8) selon la direction privilégiée (10) d'avancement dudit véhicule (1).

3. Véhicule selon la revendication 1, **caractérisé en ce que** la plateforme (2) comporte, au niveau de l'axe de rotation (9) de la plateforme (2), une structure en chappe formée par deux bras (13, 14) s'étendant de part et d'autre de la colonne de direction (3).

4. Véhicule selon la revendication 1, **caractérisé en ce qu'**il comporte un contenant (20, 30, 40) mobile par rapport audit tube (24, 34, 44) et des moyens d'accouplement (25, 35, 45) pour transmettre et transformer le mouvement de rotation de la plateforme (22, 32, 42) en un mouvement plan du contenant (20, 30, 40) par rapport au tube (24, 34, 44).

5. Véhicule selon la revendication 4, **caractérisé en ce que** les moyens d'accouplement (25) comportent une excroissance (26) de la plateforme (22) permettant de former une articulation (27) avec le contenant (20), ladite articulation (27) étant agencée à l'avant de l'axe de rotation (29) de la plateforme (22) selon la direction privilégiée (10) d'avancement dudit véhicule (21), parallèlement par rapport à l'axe de rotation (29) de la plateforme (22).

6. Véhicule selon la revendication 5, **caractérisé en ce que** les moyens d'accouplement (25) comportent une bague toroïdale (28) solidaire du contenant (20), ladite bague toroïdale (28) étant emmanché sur le tube (24) pour former une liaison linéaire annulaire entre le tube (24) et le contenant (20).

7. Véhicule selon la revendication 4, **caractérisé en ce que** les moyens d'accouplement (35) comportent un pignon (38) solidaire de la plateforme (32) et une crémaillère (33) solidaire du contenant (30).

8. Véhicule selon la revendication 4, **caractérisé en ce que** les moyens d'accouplement (45) comportent au moins une biellette (43) assujettie en liaison pivot au niveau de deux extrémités (47, 48) avec, d'une part, une excroissance (46) de la plateforme (42), et d'autre part, le compartiment (40).

9. Véhicule selon l'une des revendications 7 ou 8, **caractérisé en ce que** les moyens d'accouplement (35, 45) comportent un coulisseau (39, 49) solidaire du contenant (30, 40), ledit coulisseau (39, 49) étant emmanché sur le tube (34, 44) pour former une liaison pivot glissant entre le tube (34, 44) et le contenant (30, 40).

10. Véhicule selon la revendication 4, **caractérisé en ce que** les moyens de pilotage (6) sont mobiles en translation par rapport au tube (4) et peuvent s'escamoter, au moins partiellement, dans le volume général d'encombrement du contenant (20).

11. Véhicule selon la revendication 1, **caractérisé en ce qu'**il comporte des moyens de verrouillage (50), dans une position fermée, du mouvement de rotation de la plateforme (22) rapport à la colonne de direction (23).

12. Véhicule selon la revendication 1, **caractérisé en ce qu'**il comporte des moyens de verrouillage automatique (15, 115, 215) de la rotation de ladite au moins une roulette avant (8) par rapport à la colonne de direction (3, 103, 203), lesdits moyens de verrouillage automatique (15, 115, 215) étant actionnés automatiquement lorsque la plateforme (2) est placée dans ladite position fermée.

13. Véhicule selon la revendication 12, caractérisé en ce lesdits moyens de verrouillage automatique (15, 115) de la rotation de ladite au moins une roulette avant (8) sont formés par un doigt d'indexage (16, 116) solidaire de la plateforme (2) et coopérant avec une gorge (17, 117) ménagée dans une fourche de fixation (19, 119) de ladite roulette avant (8).

14. Véhicule selon la revendication 12, caractérisé en ce lesdits moyens de verrouillage automatique (215) de la rotation de ladite au moins une roulette avant (8) sont formés par deux butées (216) solidaires de la plateforme (2) et coopérant avec une excroissance radiale (217) d'une fourche de fixation (219) de ladite roulette avant (8).

## Patentansprüche

1. Radfahrzeug (1, 21, 31, 41) in Form eines Rollers, umfassend eine einzige Plattform (2, 22, 32, 42), auf die sich ein Nutzer stellen kann, um sich fortzubewegen, sowie eine Lenksäule (3, 23), die es ermöglicht, ein Rohr (4, 24, 34, 44) rotierend zu lenken, welches an einem ersten Ende (5) eine Steuervorrichtung (6), zum Beispiel einen Lenker, und an einem zweiten Ende (7) eine Vorderrolle (8) umfasst, wobei die Plattform (2, 22, 32, 42) in Bezug auf die Lenksäule (3, 23) durch eine Schwenkverbindung gemäß einer Rotationsachse (9, 29) angeordnet ist, die in Bezug auf eine privilegierte Fortbewegungsrichtung (10) des Fahrzeugs (1, 21, 31, 41) senkrecht steht, **dadurch gekennzeichnet, dass** die Rotationsachse (9, 29) der Plattform (2, 22, 32, 42) in Bezug auf die Lenksäule (3, 23) in einem Bereich angeordnet ist, der sich gemäß der bevorzugten Fortbewegungsrichtung (10) des Fahrzeugs (1, 21, 31, 41) vorne an der Lenksäule (3, 23) befindet, im Gegensatz zu einem hinten an der Lenksäule (3, 23) befindlichen Bereich, wo eine Hinterrolle (18) mit der Plattform (2, 22, 32, 42) kooperiert, und wobei die Rotationsachse (9, 29) das Schwenken der Plattform (2, 22, 32, 42) zwischen einer entfalteten und einer gefalteten Position ermöglicht, in der die Plattform (2, 22, 32, 42) in Bezug zum Rohr (4, 24, 34, 44) im Wesentlichen parallel angeordnet ist.

2. Fahrzeug gemäß Anspruch 1, **dadurch gekennzeichnet, dass** die Rotationsachse (9) der Plattform (2) in Bezug auf die Lenksäule (3) vorne an einem Kontaktpunkt (11) mit dem Boden (12) der mindestens einen Vorderrolle (8) gemäß der bevorzugten Fortbewegungsrichtung (10) des Fahrzeugs (1) angeordnet ist.

3. Fahrzeug gemäß Anspruch 1, **dadurch gekennzeichnet, dass** die Plattform (2) im Bereich der Rotationsachse (9) der Plattform (2) eine Stützlagerstruktur umfasst, die von zwei Auslegern bzw. Armen (13, 14) gebildet wird, die sich auf der einen und der anderen Seite der Lenksäule (3) erstrecken.

4. Fahrzeug gemäß Anspruch 1, **dadurch gekennzeichnet, dass** es einen, in Bezug zum Rohr (24, 34, 44) mobilen Behälter (20, 30, 40), und Kopplungsvorrichtungen (25, 35, 45) umfasst, um die Rotationsbewegung der Plattform (22, 32, 42) zu übertragen und sie in eine ebene Bewegung des Behälters (20, 30, 40) in Bezug zum Rohr (24, 34, 44) zu verwandeln.

5. Fahrzeug gemäß Anspruch 4, **dadurch gekennzeichnet, dass** die Kopplungsvorrichtungen (25) eine Ausstülpung (26) der Plattform (22) umfassen, die es ermöglicht, mit dem Behälter (20) ein Gelenk (27) zu bilden, wobei das Gelenk (27) vorn an der Rotationsachse (29) der Plattform (22) gemäß der bevorzugten Fortbewegungsrichtung (10) des Fahrzeugs (21) parallel in Bezug zur Rotationsachse (29) der Plattform (22) angeordnet ist.

6. Fahrzeug gemäß Anspruch 5, **dadurch gekennzeichnet, dass** die Kopplungsvorrichtungen (25) einen toroidalen, mit dem Behälter (20) solidarischen Ankerring (28) umfassen, wobei der toroidale Ankerring (28) auf das Rohr (24) aufgesteckt ist, um eine lineare ringförmige Verbindung zwischen dem Rohr (24) und dem Behälter (20) zu bilden.

7. Fahrzeug gemäß Anspruch 4, **dadurch gekennzeichnet, dass** die Kopplungsvorrichtungen (35) ein mit der Plattform (32) solidarisches Ritzel (38) und eine mit dem Behälter (30) solidarische Zahnstange (33) umfassen.

8. Fahrzeug gemäß Anspruch 4, **dadurch gekennzeichnet, dass** die Kopplungsvorrichtungen (45) mindestens eine Schubstange (43), die an den beiden Enden (47, 48) einer Schwenkbewegung unterzogen wird, mit einer Ausstülpung (46) der Plattform (42) einerseits, und dem Abteil (40) andererseits umfassen.

9. Fahrzeug gemäß einem der Ansprüche 7 oder 8, **dadurch gekennzeichnet, dass** die Kopplungsvorrichtungen (35, 45) ein mit dem Behälter (30, 40) solidarisches Gleitstück (39, 49) umfassen, wobei das Gleitstück (39, 49) auf das Rohr (34, 44) aufgesteckt ist, um eine gleitende Schwenkbewegung zwischen dem Rohr (34, 44) und dem Behälter (30, 40) zu bilden.

10. Fahrzeug gemäß Anspruch 4, **dadurch gekennzeichnet, dass** die Steuervorrichtungen (6) in Bezug zum Rohr (4) längs verschiebbar sind und mindestens teilweise im Gesamtabmessungsvolumen des Behälters (20) versenkt werden können.

11. Fahrzeug gemäß Anspruch 1, **dadurch gekennzeichnet, dass** es in einer geschlossenen Position Verriegelungsvorrichtungen (50) für die Rotationsbewegungen der Plattform (22) in Bezug auf die Lenksäule (23) umfasst.

12. Fahrzeug gemäß Anspruch 1, **dadurch gekennzeichnet, dass** es automatische Verriegelungsvorrichtungen (15, 115, 215) der Umdrehung der mindestens einen Vorderrolle (8) in Bezug auf die Lenksäule (3, 103, 203) umfasst, wobei die automatischen Verriegelungsvorrichtungen (15, 115, 215) automatisch betätigt werden, wenn die Plattform (2) in die geschlossene Position versetzt wird.

13. Fahrzeug gemäß Anspruch 12, **dadurch gekennzeichnet, dass** die automatischen Verriegelungsvorrichtungen (15, 115) der Umdrehung der mindestens einen Vorderrolle (8) mit Hilfe eines mit der Plattform (2) solidarischen Indexstifts (16, 116) gebildet sind, der mit einer Rille (17, 117) kooperiert, die auf einer Befestigungsgabel (19, 119) der Vorderrolle (8) angebracht ist.

14. Fahrzeug gemäß Anspruch 12, **dadurch gekennzeichnet, dass** die automatischen Verriegelungsvorrichtungen (215) der Umdrehung der mindestens einen Vorderrolle (8) mit Hilfe von zwei mit der Plattform (2) solidarischen Anschläge (216) gebildet sind, die mit einer radialen Ausstülpung (217) einer Befestigungsgabel (219) der Vorderrolle (8) kooperieren.

## Claims

1. Wheeled vehicle (1, 21, 31, 41) such as a scooter comprising a single deck (2, 22, 32, 42) which supports the user for its movements and a steerer (3, 23) for guiding a tube (4, 24, 34, 44) in rotation, comprising at a first end (5), steering means (6), such as a handlebar and at a second end (7), a front wheel (8), while such deck (2, 22, 32, 42) is connected by a pivoting linkage to the said steerer (3, 23) according to a rotation pin (9, 29) perpendicular to a privileged direction of movement (10) of the said vehicle (1, 21, 31, 41) **characterized in that this said** rotation pin (9, 29) of the deck (2, 22, 32, 42) with respect to steerer (3, 23) is placed ahead of the steerer (3, 23), in the said privileged direction (10) of movement of the vehicle (1, 21, 31, 41), as opposed to an area situated behind the steerer (3, 23) where a rear wheel (18) works together with the deck (2, 22, 32, 42), the said rotation pin (9, 29) allowing the deck (2, 22, 32, 42) to be tilted between a deployed position and a folded position in which the deck (2, 22, 32, 42) is arranged substantially in parallel to the tube (4, 24, 34, 44).

2. Vehicle according to claim 1, **characterized in that** the rotation pin (9) of deck (2) with respect to the steerer (3) is arranged in front of point a contact (11) with the ground (12) on the said at least one front wheel (8) in the privileged direction (10) of movement of the said vehicle (1).

3. Vehicle according to claim 1, **characterized in that** the deck (2) comprises, at the rotation pin (9) of the deck (2), a clevis structure closed by two arms (13, 14) extending either side of the steerer (3).

4. Vehicle according to claim 1, **characterized in that** it comprises a container (20, 30, 40) moving with respect to the said tube (24, 34, 44) and coupling means (25, 35, 45) for transmitting and transforming the rotation movement of the deck (22, 32, 42) into a plane movement of the container (20, 30, 40) with respect to the tube (24, 34, 44).

5. Vehicle according to claim 4, **characterized in that** the coupling means (25) comprise a bracket (26) on the deck (22) designed to form a hinge (27) with the container (20), said hinge (27) being installed ahead of the rotation pin (29) of the deck (22) in a privileged direction (10) of movement of the said vehicle (21), in parallel with respect to the rotation pin (29) of the deck (22).

6. Vehicle according to claim 5, **characterized in that** the coupling means (25) comprise a toroidal bushing (28) integral with the container (20), the said toroidal bushing (28) being tight-fitted on the tube (24) to form an annular or linear link between the tube (24) and the container (20).

7. Vehicle according to claim 4, **characterized in that** the coupling means (35) comprise a driving gear (38), integral with the deck (32) and a rack (33) integral with the container (30).

8. Vehicle according to claim 4, **characterized in that** the coupling means (45) comprise at least one connecting rod (43) connected by a pivoting linkage to the two ends (47, 48) with, on the one hand, a bracket (46) in the deck (42) and on the other, the compartment (40).

9. Vehicle according to one of the claims 7 or 8, **characterized in that** the coupling means (35, 45) comprise a slide (39, 49) integral with the container (30, 40), the said slide (39, 49) being tight-fitted on the tube (34, 44) to form a sliding pivoting linkage between the tube (34, 44) and the container (30, 40).

10. Vehicle according to claim 4, **characterized in that** the steering means (6) are mobile in translation with respect to the tube (4) and can retract, at least partially, into the overall dimensional volume of the container (20).

11. Vehicle according to claim 1, **characterized in that** it comprises locking means (50) which, in the closed position, secures the rotational movement of the deck (22) with respect to the steerer (23).

12. Vehicle according to claim 1, **characterized in that** it comprises automatic locking means (15, 115, 215) preventing the rotation of the said at least one front wheel (8) with respect to the steerer (3, 103, 203), such automatic locking means (15, 115, 215) being activated automatically when the deck (2) is brought to the closed position.

13. Vehicle according to claim 12, **characterized in that** the said automatic locking means (15, 115) prevents the rotation of the at least one front wheel (8) consist of an indexing dowel (16, 116), integral with the deck (2) and working with a groove (17, 117) formed in the attaching fork (19, 119) of the said front wheel (8).

14. Vehicle according to claim 12, **characterized in that** the said automatic locking means (215) preventing the rotation of the said at least one front wheel (8) comprise two stops (216) integral with the deck (2) and working together with a radial bracket (217) on an attaching fork (219) of the said front wheel (8).
